# EUROPEAN PATENT APPLICATION

(11) **EP 2 463 826 A1**
(43) Date of publication of application: **13.06.2012**
(21) Application number: 11152544.0
(22) Date of filing: 28.01.2011
(51) Int. Cl.: G07C 5/08, G06F 17/30, G06F 12/02

(54) **Vehicle recording apparatus**

(30) Priority: 06.12.2010 TW 099142357
(71) Applicant: Aptos Technology Inc., Park Hu-Kou, Hsin-chu 303 (CN)
(72) Inventor: Hung, Chia-Chun, Hu-Kou,Hsin-Chu 303 (TW)
(74) Representative: Reichert, Sabine

(57) **Abstract**

A vehicle recording apparatus (20a) includes a video capturing unit (201), a storage unit (202) and a processing unit (203). The video capturing unit is for capturing a video (I1). The storage unit includes a file (122) including an index block (122a) and a plurality of storage blocks (122b). The processing unit stores the video into the storage block according to a data index in the index block. The aforementioned vehicle recording apparatus may prevent an execution of file opening or closing from causing the video unable to be recorded, or an abnormal file close from leading to the damage of the file. A video recording method is also disclosed.

## Description

### BACKGROUND OF THE INVENTION

### 1. FIELD OF THE INVENTION

The present invention relates to a vehicle recording apparatus, and more particularly to a vehicle recording apparatus which may prevent losing a video during video recording.

### 2. DESCRIPTION OF THE PRIOR ART

A vehicle recording apparatus records video in front of a vehicle when the vehicle is traveling. In case of an accident, a user may retrieve the video recorded before the accident to determine which party is liable for the accident. For ease of searching the video or because of limitations of a file system, the prior art vehicle recording apparatus stores each video fragment as a separate file.

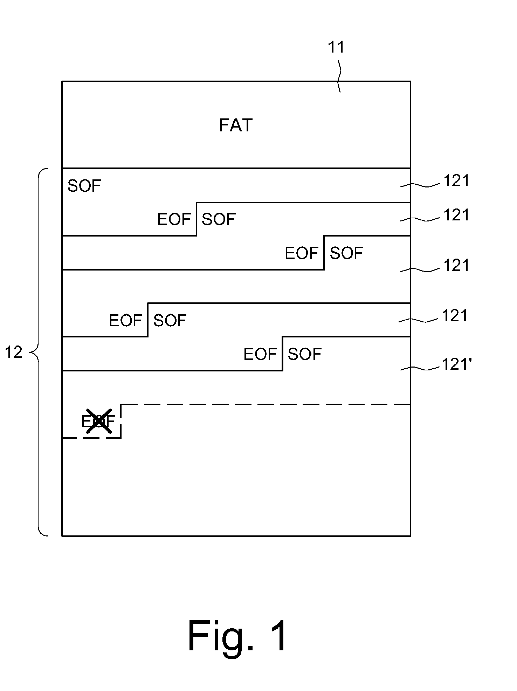

Referring to FIG. 1, the FAT (file allocation table) file system framework commonly used at present includes a file allocation table 11 and a storage space 12. The file allocation table is a mapping table of partitions of data, and is for designating how clusters are stored. Files 121 are stored in the storage space 12. A complete file 121 includes a start of file SOF and an end of file EOF. However, when a file is being opened or closed, it is not accessible, and when the number of files increases or the size of each file expands, it would take more time to open and close a file, which may cause the vehicle recording apparatus unable to record a video completely. Besides, power outage or damages to the vehicle recording apparatus may happen during an accident, which may lead to the file 121' not being closed normally and damaged. And it is this damaged file 121' that records the video before the accident. The problem of the accident causing the file 121' closest to the accident inaccessible greatly reduces the reliability and the value of the vehicle recording apparatus.

In summary, it is highly desirable to ensure a vehicle recording apparatus to record a complete video between the start and stop of the recording.

### SUMMARY OF THE INVENTION

The present invention is directed to a vehicle recording apparatus which create a file in advance, and create an index block and a plurality of storage blocks in the file whereby video may be recorded in accordance with the data index in the index block into the storage blocks to prevent situations where the video are not able to be recorded during an execution of file opening or closing, or the file is damaged and the recorded video is inaccessible when the file is abnormally closed in an accident.

According to an embodiment, a vehicle recording apparatus includes a first video capturing unit, a storage unit and a processing unit. The first video capturing unit is for capturing a first video in front of a vehicle. The storage unit includes a file under a file system, and the file includes an index block and a plurality of storage blocks. The processing unit is electrically connected with the first video capturing unit and the storage unit, and stores the first video into the storage blocks according to a data index in the index block.

The objective, technologies, features and advantages of the present invention will become more apparent from the following description in conjunction with the accompanying drawings, wherein certain embodiments of the present invention are set forth by way of illustration and examples.

### BRIEF DESCRIPTION OF THE DRAWINGS

FIG. 1 is a schematic diagram illustrating the prior art file system framework;

FIG. 2 is a block diagram illustrating the vehicle recording apparatus according to an embodiment of the present invention;

FIG. 3 is a schematic diagram illustrating a structure of a file of the vehicle recording apparatus according to an embodiment of the present invention;

FIG. 4 is a block diagram illustrating the vehicle recording apparatus according to another embodiment of the present invention; and

FIG. 5 is a flow chart illustrating the video recording method according to an embodiment of the present invention.

### DESCRIPTION OF THE PREFERRED EMBODIMENT

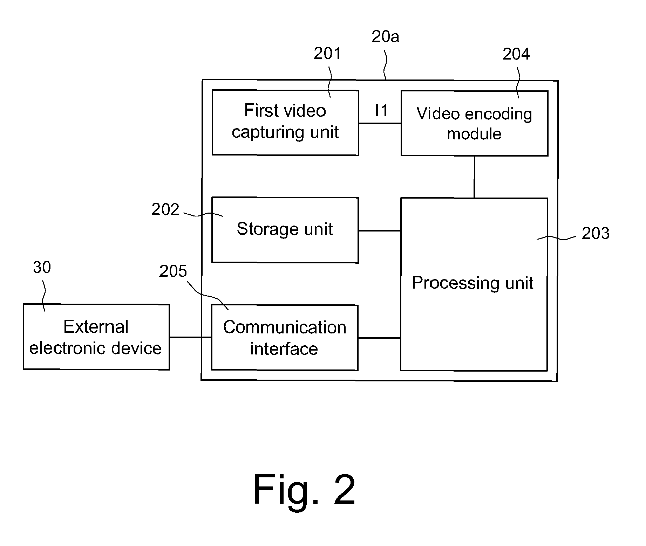

Referring to FIG. 2, a vehicle recording apparatus 20a according to an embodiment includes a first video capturing unit 201, a storage unit 202 and a processing unit 203. The first video capturing unit 201 is for capturing a first video I1 in front of a vehicle. For example, the first video capturing unit may be a CCD (charged coupled device), or a CMOS (complementary metal oxide semiconductor) sensor. A file under a file system is created in the storage unit 202 and the file includes an index block and a plurality of storage blocks. Then the first video I1 captured by the first video capturing unit 201 is saved to the file in the storage unit 202. According to an embodiment, the storage unit 202 may be a flash memory, a hard disk or the combination thereof. Besides, the storage unit 202 may be built-in to the vehicle recording apparatus 20a or may be an external device electrically connected with the vehicle recording apparatus 20a. For example, the storage unit 202 may be a memory card or an external hard disk.

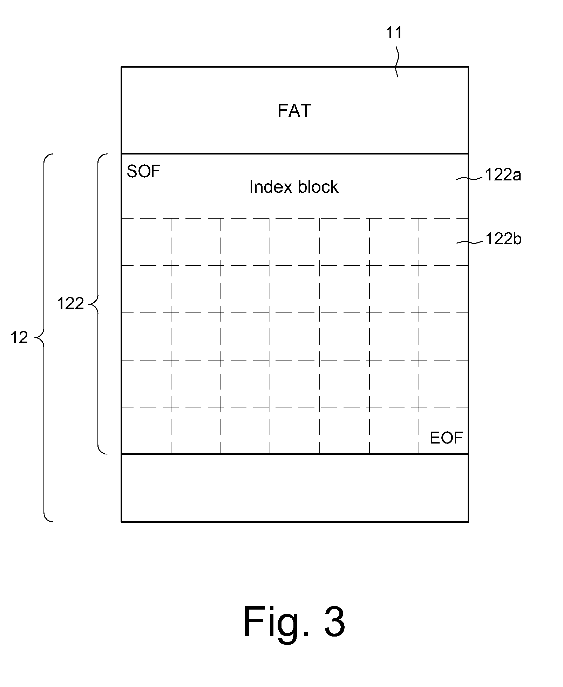

The processing unit 203 is electrically connected with the first video capturing unit 201 and the storage unit 202. The processing unit 203 may store the first video I1 captured by the first video capturing unit 201 in the storage blocks of the file according to the data index in the index block. Referring to FIG. 3, a FAT file system framework is taken as an example for the description below. First, a file system following the file system framework is created in the storage unit 202. The file system includes a file allocation table 11 and a storage space 12. The processing unit 203 creates a complete file 122 that includes SOF and EOF in the storage unit 202. Particularly, the file 122 includes an index block 122a and a plurality of storage blocks 122b, wherein a data index in the index block 122a provides addressing to the storage blocks 122b. In this manner, the processing unit 203 may store the first video I1 captured by the first video capturing unit 201 according to the data index in the index block 122a into the storage block 122b of the file 122. Later on, through the data index in the index block 122a, the processing unit 203 may access the corresponding storage blocks 122b. When all the storage blocks 122b have been occupied by video data, the processing unit 203 would overwrite the earliest video fragment with the latest video fragment; or the processing unit 23 would create another file 122 in advance for storing the latest video fragment.

It is noted that a continuous first video I1 may be divided into a plurality of video fragments to be stored so as to facilitate searching and managing of the video later on. For example, the user may set a unit of storage as a video fragment of 2, 5 or 10 minutes in length. Later on, the user may directly select the video fragment at a specific time to be played, or provide a third party a copy of a specific video fragment without any video editing.

According to the aforementioned structure, since a complete file including SOF and EOF is created in advance, the vehicle recording device 20a may prevent losing a portion of video because of file opening or closing during the period of video recording. Besides, it may also prevent the file 122 from being damaged by an abnormal close resulted from power outage or destroy of the vehicle recording apparatus happened during an accident.

Referring to FIG. 2 again, the vehicle recording apparatus 20a according to an embodiment may include a video encoding module 204 electrically connected between the first video capturing unit 201 and the processing unit 203. The video encoding module 204 is for performing video encoding on the first video I1 captured by the first video capturing unit 201 to lower the computational load of the processing unit 203. Besides, the vehicle recording apparatus 20a according to an embodiment may include a communication interface 205 electrically connected with the processing unit 203. An external electronic device 30 such as a computer which has a stronger computational power may connect electrically with the vehicle recording apparatus 20a through the communication interface 205 to access the recorded video in the storage unit 202. According to an embodiment, the communication interface 205 may be a USB (universal serial bus) interface, IEEE 1394 interface, Bluetooth, infrared, wired network, wireless network, mobile communication module or the combination thereof.

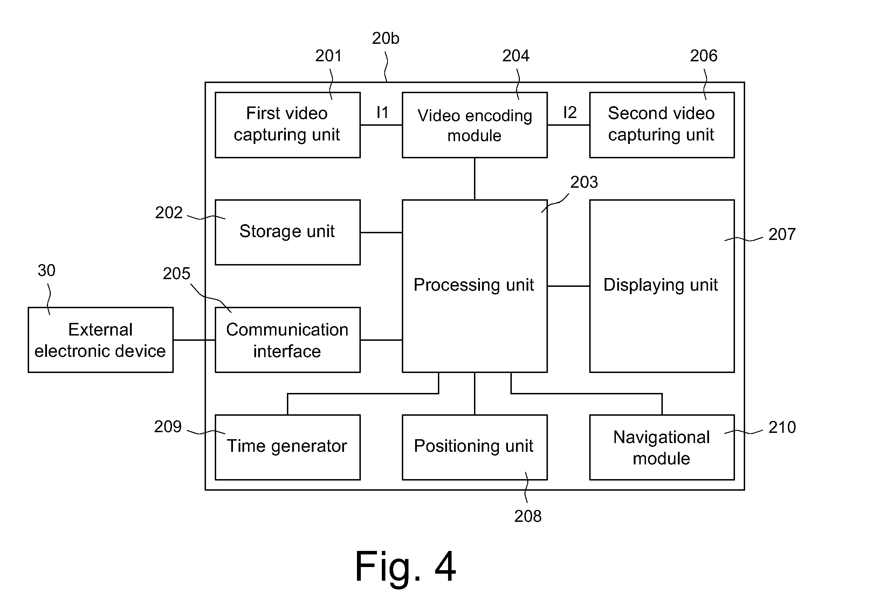

Referring to FIG. 4, the vehicle recording apparatus 20b according to an embodiment further includes a second video capturing unit 206 which may connect electrically with the processing unit 203 through the video encoding module 204. The second video capturing unit 206 may capture a second video I2, such as a video to either side of, behind, or inside the vehicle. By the same token, the second video I2 may be stored into the storage block 122b in accordance with the data index in the index block 122a. According to an embodiment, the vehicle recording apparatus 20b may include a displaying unit 207 electrically connected with the processing unit 203. The displaying unit 207 may be used for displaying the real-time video captured by the first video capturing unit 201 or the second video capturing unit 206, or the recorded video stored in the storage unit 202.

According to an embodiment, the vehicle recording apparatus 20b may include a positioning unit 208 electrically connected with the processing unit 203. For example, the positioning unit 208 may be a GPS (global positioning system) for generating positioning coordinates to be logged for the track traveled. Preferably, the vehicle recording apparatus 20b may include a time generator 209 electrically connected with the processing unit 203. The time generator 209 outputs a time stamp corresponding to the generated positioning coordinates by the positioning unit 208. According to the time stamp, the vehicle recording apparatus 20b may associate the recorded video in the storage unit 202 with the positioning coordinates. By outputting the recorded video and the positioning coordinates in integral, the user may have a clear understanding of the traveled track and the recorded video along the track.

According to an embodiment, the vehicle recording apparatus 20b further includes a navigational module 210 electrically connected with the processing unit 203. The navigational module 210 generates navigational information according to the positioning coordinates output by the positioning unit 208, destination coordinates set by the user and map information. The displaying unit 207 may display the navigational information output by the navigational module 210 for guiding the user to drive along the planned route. Note that the map information may be stored in the storage unit 202 in advance, or may be obtained externally. For instance, the vehicle recording apparatus 20b may obtain the map information from the internet, such as Google map, through the wireless network or the mobile communication network as the reference for navigation.

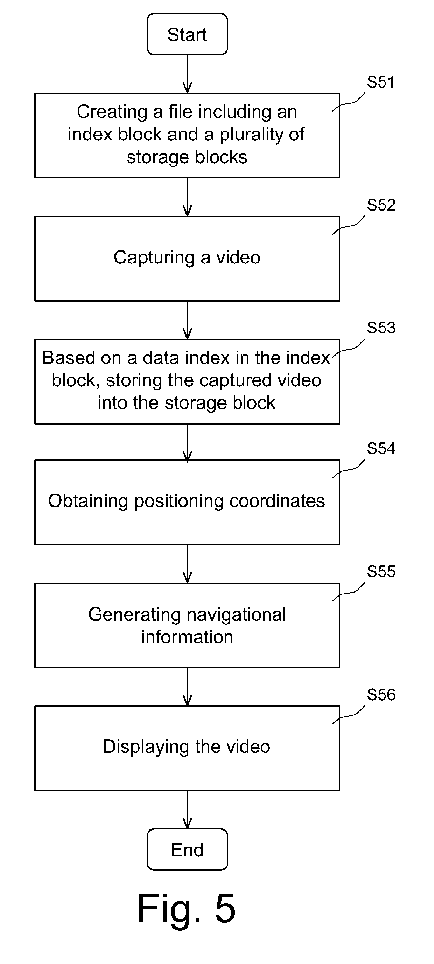

Referring to FIG. 5, the video recording method according to an embodiment includes: creating a file under a file system, the file including an index block and a plurality of storage blocks (S51); capturing a video (S52), such as the video in front of, to either side of, behind or inside the vehicle; and based on a data index in the index block, storing the captured video into the storage block (S53). The video recording method may optionally include: obtaining positioning coordinates (S54) to be recorded for the traveled track; based on the positioning coordinates output by step S54, generating navigational information (S55); or displaying the real-time video captured by step S52 or the navigational information output by step S55 (S56). The detail description of the foregoing steps has been provided above and is omitted here.

To summarize the foregoing description, the vehicle recording apparatus and the video recording method of the present invention creates a file containing an index block and a plurality of storage blocks in advance, so that a video may be recorded in accordance with the data index in the index block into the storage blocks, thereby preventing an execution of file opening or closing during the recordation of the video from causing the video unable to be recorded or an abnormal close of the file during accident from leading the file to being damaged and the recorded video inaccessible.

While the invention is susceptible to various modifications and alternative forms, a specific example thereof has been shown in the drawings and is herein described in detail. It should be understood, however, that the invention is not to be limited to the particular form disclosed, but to the contrary, the invention is to cover all modifications, equivalents, and alternatives falling within the spirit and scope of the appended claims.

## Claims

1. A vehicle recording apparatus (20a), the improvement comprising:
a first video capturing unit (201) for capturing a first video (I1) in front of a vehicle;
a storage unit (202) comprising a file (122) under a file system, the file (122) comprising an index block (122a) and a plurality of storage blocks (122b); and
a processing unit (203) electrically connected with the first video capturing unit (201) and the storage unit (202), the processing unit (203) storing the first video (I1) into the storage blocks (122b) based on a data index in the index block (122a).

2. The vehicle recording apparatus (20a) according to claim 1, the improvement further comprising:
a video encoding module (204) electrically connected between the first video capturing unit (201) and the processing unit (203) for performing video encoding on the first video (I1).

3. The vehicle recording apparatus (20a) according to claim 1, the improvement further comprising:
a communication interface (205) electrically connected with the processing unit (203) for electrically connecting with an external electronic device (30).

4. The vehicle recording apparatus (20a) according to claim 3, wherein the communication interface (205) comprises a USB, IEEE 1394, Bluetooth, infrared, wired network, wireless network, mobile communication module or the combination thereof.

5. The vehicle recording apparatus (20a) according to claim 1, wherein the first video (I1) is divided into a plurality of video fragments stored in the storage block (122b).

6. The vehicle recording apparatus (20b) according to claim 1, the improvement further comprising:
a second video capturing unit (206) electrically connected with the processing unit (203) for capturing a second video (I2), the processing unit (203) storing the second video (I2) into the storage block (122b) according to the data index in the index block (122a).

7. The vehicle recording apparatus (20b) according to claim 1, the improvement further comprising:
a positioning unit (208) electrically connected with the processing unit (203) for generating positioning coordinates.

8. The vehicle recording apparatus (20b) according to claim 7, the improvement further comprising:
a time generator (209) electrically connected with the processing unit (203) for generating a corresponding time stamp of the positioning coordinates.

9. The vehicle recording apparatus (20b) according to claim 7, the improvement further comprising:
a navigational module (210) electrically connected with the processing unit (203) for generating navigational information based on the positioning coordinates, destination coordinates and map information.

10. The vehicle recording apparatus (20b) according to claim 9, wherein the map information is stored in the storage unit (202) or is obtained externally.

11. The vehicle recording apparatus (20b) according to claim 9, the improvement further comprising:
a displaying unit (207) electrically connected with the processing unit (203) for displaying the navigational information.

12. The vehicle recording apparatus (20b) according to claim 1, the improvement further comprising:
a displaying unit (207) electrically connected with the processing unit for displaying the first video.

13. The vehicle recording apparatus (20a) according to claim 1, wherein the first video capturing unit (201) comprises a CCD or a CMOS sensor.

14. The vehicle recording apparatus (20a) according to claim 1, wherein the storage unit (202) comprises a flash memory, a hard disk or the combination thereof.

15. The vehicle recording apparatus (20a) according to claim 1, wherein the storage unit (202) is built-in or external to the video recording apparatus (20a).
